# EUROPEAN PATENT APPLICATION

(11) **EP 2 111 063 A1**
(43) Date of publication of application: **21.10.2009**
(21) Application number: 08783958.5
(22) Date of filing: 13.08.2008
(51) Int. Cl.: H04W 4/00

(54) **METHOD FOR PROVIDING TERMINAL APPEARANCE CUSTOMIZATION CONTENT, APPEARANCE CUSTOMIZATION SERVER AND SYSTEM**

(30) Priority: 29.08.2007 CN 200710142588
(71) Applicant: Huawei Technologies Co., Ltd., Longgang District, Shenzhen, Guangdong 518129 (CN)
(72) Inventor: WANG, Rui, Shenzhen 518129 (CN); CHAI, Xiaoqian, Shenzhen 518129 (CN); LI, Kepeng, Shenzhen 518129 (CN); ZHAO, Hui, Shenzhen 518129 (CN); LUO, Yaoping, Shenzhen 518129 (CN)
(74) Representative: Kreuz, Georg Maria
(86) International application number: PCT/CN2008/071965
(87) International publication number: WO 2009/030134

(57) **Abstract**

A method for providing customized look-and-feel contents of terminals includes: obtaining information about capabilities of a terminal; obtaining a look-and-feel content corresponding to the capability information; and sending the look-and-feel content to the terminal. A look-and-feel customization server includes: a capability information obtaining unit, configured to obtain information about capabilities of a terminal; a look-and-feel content obtaining unit, configured to obtain a look-and-feel content corresponding to the capability information; and a look-and-feel content sending unit, configured to send the look-and-feel content to the terminal. A look-and-feel customization system is also provided. According to the present invention, the efficiency of sending a look-and-feel content to the terminal is improved; the waste of network resources is avoided; and the user satisfaction with the look-and-feel customization service is improved.

## Description

This application claims priority to Chinese Patent Application No. 200710142588.4, filed with the Chinese Patent Office on August 29, 2007 and entitled "Method for Providing Customized Look-and-Feel Contents of Terminals, and Look-and-Feel Customization Server and System Thereof", which is incorporated herein by reference in its entirety.

### Field of the Invention

The present invention relates to communication technologies, and in particular, to a method for providing customized look-and-feel contents of terminals, and a look-and-feel customization server and system thereof.

### Background of the Invention

In recent years, communication terminals have become indispensable tools for contact between people. With respect to the look and feel presented by a terminal (primarily the contents displayed by the terminal to the user, for example, wallpapers and menus), people are not satisfied with the look-and-feel contents included with the terminal any more, but impose further individualized requirements.

To meet the individualized requirements of users on the look-and-feel contents displayed by the terminal, the conventional art provides the following solution: The Service Provider (SP) provides the look-and-feel contents of various styles on the website, and the user may customize a desired look-and-feel content on the website of the SP; the SP sends the requested look-and-feel content to the terminal according to the customization information of the user; and the user receives the look-and-feel content and applies the content on the terminal, thus realizing an individualized look and feel.

During the research and practice of the present invention, the inventor finds that: In the conventional art, the SP sends the requested look-and-feel content to the terminal directly after receiving the request for customizing a look-and-feel content from the user, without considering the final effect of applying the look-and-feel content on the terminal. In fact, different models of terminals have different performance, and the effect of the same look-and-feel content varies sharply between the models of terminals. The effect of the look-and-feel content may be good on some terminals but poor on other terminals, or the look-and-feel content is even inapplicable. Therefore, sending the look-and-feel content to a terminal without considering the effect of applying the look-and-feel content on the terminal may lead to a great waste of network resources. Furthermore, the user is generally charged for the customized look-and-feel contents. If the user pays for the look-and-feel contents that have a poor effect or are even inapplicable, the user satisfaction is reduced.

### Summary of the Invention

A method for providing customized look-and-feel contents of terminals, and a look-and-feel customization server and system thereof are proposed to improve the efficiency of sending look-and-feel contents to terminals and avoid the waste of network resources.

According to one aspect, a method for providing customized look-and-feel contents of terminals includes:
obtaining information about capabilities of a terminal;
obtaining a look-and-feel content corresponding to the capability information; and
sending the look-and-feel content corresponding to the capabilities of the terminal to the terminal.

According to one aspect, a look-and-feel customization server includes:
a capability information obtaining unit, configured to obtain information about capabilities of a terminal;
a look-and-feel content obtaining unit, configured to obtain a look-and-feel content corresponding to the capability information; and
a look-and-feel content sending unit, configured to send the look-and-feel content to the terminal.

According to one aspect, a look-and-feel customization system includes:
a terminal, configured to receive a look-and-feel content; and
a look-and-feel customization server, configured to: obtain information about capabilities of the terminal, obtain a look-and-feel content corresponding to the capability information, and send the look-and-feel content to the terminal.

As proposed herein, the look-and-feel content provided for the user corresponds to the capabilities of the terminal. Thus the efficiency of sending the look-and-feel content to the terminal is improved and the waste of network resources is avoided. Therefore, the effect of the look-and-feel content obtained by the user is good on the terminal, and the user satisfaction with the look-and-feel customization service is improved.

### Brief Description of the Drawings

FIG. 1 is a flowchart of a method for providing customized look-and-feel contents of terminals in a first embodiment;

FIG. 2 is a flowchart of a method for providing customized look-and-feel contents of terminals in a second embodiment;

FIG. 3 is a flowchart of a method for providing customized look-and-feel contents of terminals in a third embodiment;

FIG. 4 is a flowchart of a method for providing customized look-and-feel contents of terminals in a fourth embodiment;

FIG. 5 is a flowchart of a method for providing customized look-and-feel contents of terminals in a fifth embodiment;

FIG. 6 shows a structure of a look-and-feel customization server in an embodiment;

FIG. 7 shows a structure of another look-and-feel customization server in an embodiment; and

FIG. 8 shows a structure of a look-and-feel customization system in a sixth embodiment.

### Detailed Description of the Invention

A method for providing customized look-and-feel contents of terminals, a look-and-feel customization server and system thereof under the present invention are described below with reference to accompanying drawings and exemplary embodiments.

### First Embodiment

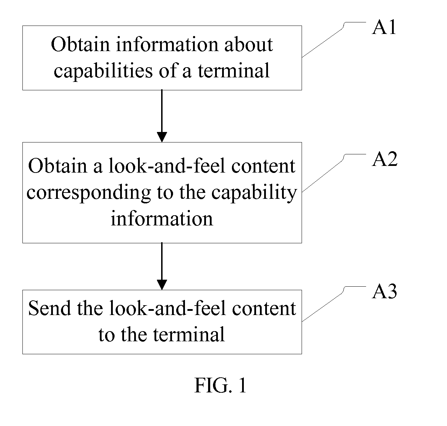

A method for providing customized look-and-feel contents of terminals is disclosed in this embodiment. As shown in FIG. 1, the method includes the following steps:

A1. A look-and-feel customization server obtains information about capabilities of a terminal.

In this embodiment, the information about capabilities of the terminal includes: hardware features (such as screen resolution and screen color quality) of the terminal, and information about the software modules installed on the terminal.

The look-and-feel customization server may start obtaining the information about capabilities of the terminal according to the look-and-feel content request sent by the terminal, or according to the SP's service policy of providing a look-and-feel content for the terminal (for example, the SP may provide a trial edition of the look-and-feel content for the user).

When the look-and-feel customization server starts obtaining the information about capabilities of the terminal according to the look-and-feel content request sent by the terminal, if the look-and-feel content request carries the information about capabilities of the terminal, the look-and-feel customization server may obtain the capability information from the request directly. If the look-and-feel content request sent by the terminal carries other specific information (such as terminal model, capability information identifier or terminal identifier), the look-and-feel customization server may obtain the corresponding capability information from the capability information server according to the specific information.

If the look-and-feel customization server starts obtaining the information about capabilities of the terminal according to the SP's service policy, the look-and-feel customization server may obtain the corresponding capability information from the capability information server directly according to the specific information (such as terminal identifier) registered by the user.

The capability information server include: terminal capability information database server, User Agent Profile (UAProf) information server, and Device Profile Evolution (DPE) server.

A2. The look-and-feel customization server obtains a look-and-feel content corresponding to the capability information.

If the look-and-feel customization server starts obtaining the information about capabilities of the terminal according to the look-and-feel content request sent by the terminal, after obtaining the information about capabilities of the terminal, the look-and-feel customization server judges whether the requested look-and-feel content corresponding to the capability information already exists, and obtains the look-and-feel content directly if the look-and-feel content already exists, or else generates and obtains the requested look-and-feel content corresponding to the capability information.

If the look-and-feel customization server starts obtaining the information about capabilities of the terminal according to the SP's service policy, after obtaining the information about capabilities of the terminal, the look-and-feel customization server judges whether the configured look-and-feel content corresponding to the capability information already exists (namely, the look-and-feel content configured in the SP's service policy and ready to be sent to the terminal), and obtains the look-and-feel content directly if the look-and-feel content already exists, or else generates and obtains the configured look-and-feel content corresponding to the capability information.

The look-and-feel content may be look-and-feel elements (such as wallpapers and menus) or a look-and-feel package composed of multiple look-and-feel elements.

A3. The look-and-feel customization server sends the look-and-feel contents to the terminal.

In this embodiment, the look-and-feel content provided for the user corresponds to the capabilities of the terminal. Therefore, the effect of the look-and-feel content obtained by the user is good on the terminal, and the user satisfaction with the look-and-feel content customization service is improved.

### Second Embodiment

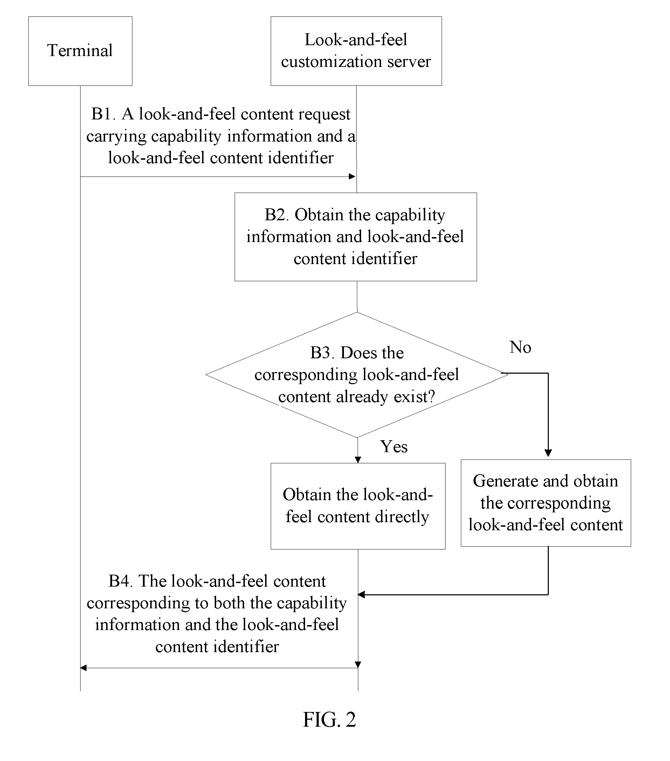

A method for providing customized look-and-feel contents of terminals is disclosed in this embodiment. In this embodiment, the information about capabilities of a terminal is reported by the terminal to the look-and-feel customization server directly. As shown in FIG. 2, supposing that the look-and-feel content customized by the user from the SP is a wallpaper identified by "Wallpaper1", the method includes the following steps:

B1. The terminal sends a look-and-feel content request to the look-and-feel customization server, where the request carries both information about capabilities of the terminal and the identifier of the requested look-and-feel content.

The information about capabilities of the terminal includes information about the screen resolution of the terminal, and the identifier of the requested look-and-feel content is Wallpaper1.

B2. After receiving the look-and-feel content request, the look-and-feel customization server parses the look-and-feel content request, and obtains both the capability information and the identifier of the requested look-and-feel content from the parsed request.

B3. The look-and-feel customization server judges whether any look-and-feel content corresponding to both the identifier of the requested look-and-feel content and the capability information already exists in the list of look-and-feel contents, and obtains the look-and-feel content directly if the look-and-feel content already exists, or else generates and obtains the look-and-feel content corresponding to both the identifier of the requested look-and-feel content and the capability information.

To make the description clearer, Table 1 gives an exemplary wallpaper list. In Table 1, the wallpapers corresponding to Wallpaper1 include Wallpaper1_A corresponding to the screen resolution of 220*176 and Wallpaper1_B corresponding to the screen resolution of 320*240.

If the screen resolution is 220*176 or 320*240 in the capability information obtained by the look-and-feel customization server, the server may obtain the corresponding Wallpaper1_A or Wallpaper1_B directly. If the screen resolution is 640*480 in the obtained capability information, no wallpaper corresponding to that screen resolution exists in the wallpapers identified by "Wallpaper1", and the look-and-feel customization server may generate a wallpaper corresponding to that screen resolution. Specifically, the server may process Wallpaper1_A or Wallpaper1_B and generate a wallpaper corresponding to the resolution of 640*480.

**Table 1 Wallpaper list**

| Wallpaper IDENTIFIER | Screen RESOLUTION | | |
|---|---|---|---|
| | 220 * 176 | 320 * 240 | 640 * 480 |
| Wallpaper1 | Wallpaper1_A | Wallpaper1_B | |
| Wallpaper2 | Wallpaper2_B | Wallpaper2_B | Wallpaper2_C |
| ... | ... | ... | ... |

B4. The look-and-feel customization server sends the look-and-feel content corresponding to both the identifier of the requested look-and-feel content and the capability information to the terminal.

### Third Embodiment

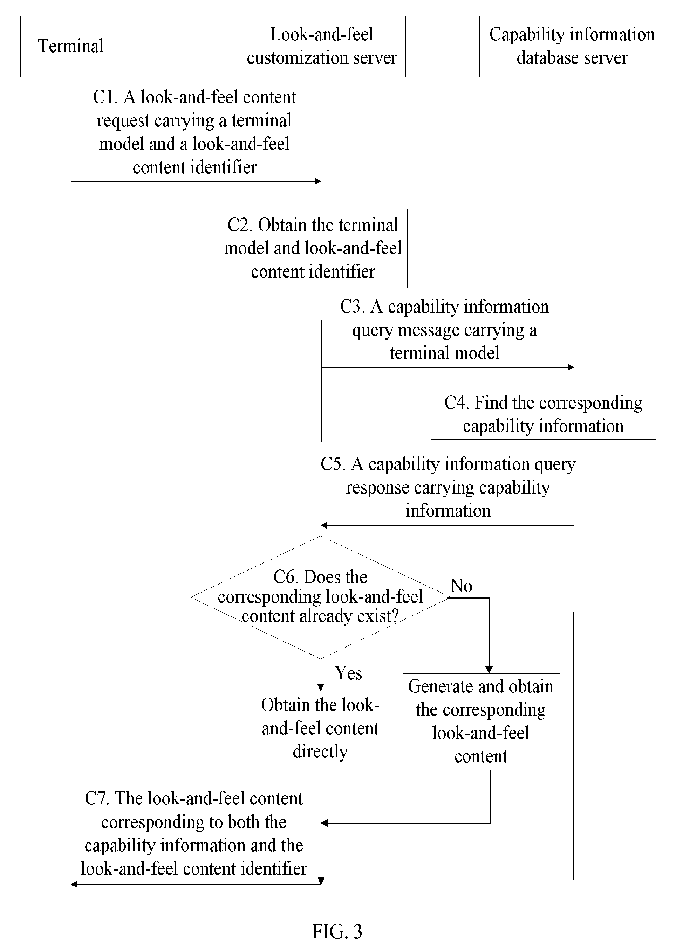

A method for providing customized look-and-feel contents of terminals is disclosed in this embodiment. In this embodiment, the look-and-feel customization server obtains information about capabilities of a terminal from the capability information database server according to the terminal model reported by the terminal. As shown in FIG. 3, supposing that the terminal model is N90 and that the look-and-feel content customized by the user from the SP is a wallpaper identified by "Wallpaper1", the method includes the following steps:

C1. The terminal sends a look-and-feel content request to the look-and-feel customization server, where the request carries both the terminal model and the identifier of the requested look-and-feel content. The terminal model is N90 and the identifier of the requested look-and-feel content is Wallpaper1.

C2. After receiving the look-and-feel content request, the look-and-feel customization server parses the look-and-feel content request, and obtains both the terminal model and the identifier of the requested look-and-feel content from the parsed request.

C3. The look-and-feel customization server sends a capability information query message which carries the obtained terminal model to a capability information database server.

In this embodiment, the capability information database server is a server that records the information about capabilities of the terminal through a general database technology.

C4. After receiving the capability information query message, the capability information database server searches the capability information list for the capability information corresponding to the terminal model. Table 2 gives an exemplary capability information list.

**Table 2 Capability information list**

| Terminal Model | Capability Information Identifier | Capability Information Type | Capability Information Content |
|---|---|---|---|
| N90 | N90.Screen | Screen resolution | 320*240 |
| | N90.Ringtone | Ring tone | 40 chords |
| | ... | ... | ... |
| N80 | N80.Screen | Screen resolution | 220*176 |
| | N80.Ringtone | Ring tone | 16 chords |
| | ... | ... | ... |
| ... | ... | ... | ... |

In this embodiment, the terminal model reported by the terminal is N90, and the corresponding capability information includes: screen resolution (320*240) and ring tone (40 chords).

C5. A capability information query response which carries the found capability information is returned to the look-and-feel customization server.

C6. After receiving the capability information query response, the look-and-feel customization server judges whether any look-and-feel content corresponding to both the identifier of the requested look-and-feel content and the capability information already exists in the list of look-and-feel contents, and obtains the look-and-feel content directly if the look-and-feel content already exists, or else generates and obtains the look-and-feel content corresponding to both the identifier of the requested look-and-feel content and the capability information.

As shown in Table 1, the identifier of the requested look-and-feel content is Wallpaper1. In the obtained capability information, the screen resolution is 320*240. Therefore, the corresponding Wallpaper1_B may be obtained directly.

C7. The look-and-feel customization server sends the look-and-feel content corresponding to both the identifier of the requested look-and-feel content and the capability information to the terminal.

### Fourth Embodiment

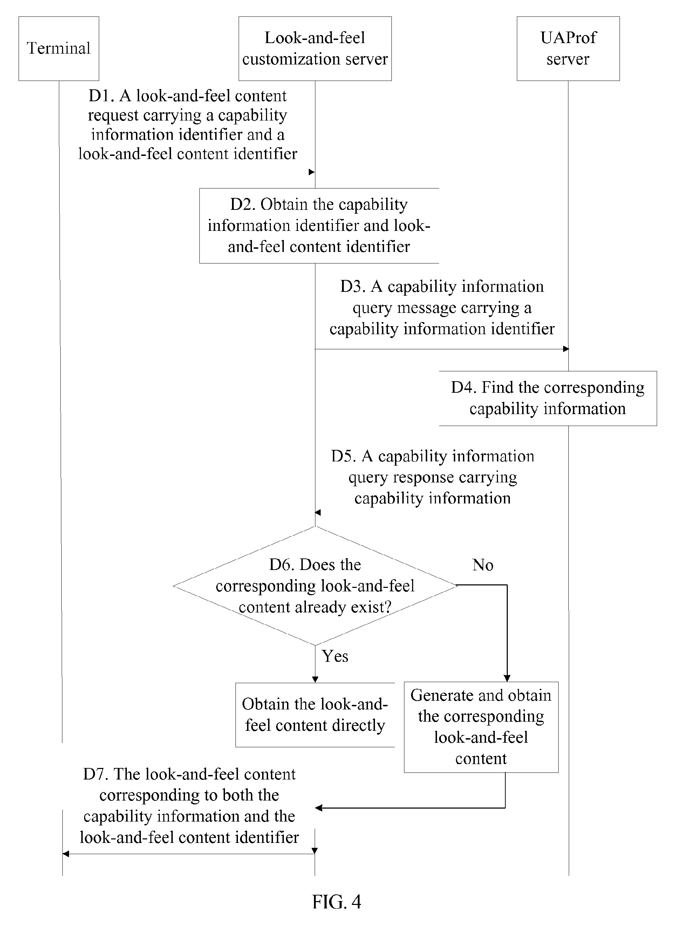

A method for providing customized look-and-feel contents of terminals is disclosed in this embodiment. In this embodiment, the look-and-feel customization server obtains information about capabilities of a terminal from a UAProf server according to the capability information identifier reported by the terminal. As shown in FIG. 4, supposing that the capability information identifier reported by the terminal is N90.Screen and that the look-and-feel content customized by the user from the SP is a wallpaper identified by "Wallpaper1", the method includes the following steps:

D1. The terminal sends a look-and-feel content request to the look-and-feel customization server, where the request carries both the capability information identifier and the identifier of the requested look-and-feel content. The capability information identifier is N90.Screen and the identifier of the requested look-and-feel content is Wallpaper1.

D2. After receiving the look-and-feel content request, the look-and-feel customization server parses the look-and-feel content request, and obtains both the capability information identifier and the identifier of the requested look-and-feel content from the parsed request.

D3. The look-and-feel customization server sends a capability information query message which carries the obtained capability information identifier to a UAProf server.

D4. After receiving the capability information query message, the UAProf server searches the capability information list for the capability information corresponding to the capability information identifier.

As shown in Table 2, in this embodiment, the capability information identifier reported by the terminal is N90. Screen, and the corresponding capability information is screen resolution (320*240).

D5. A capability information query response which carries the found capability information is returned to the look-and-feel customization server.

D6. After receiving the capability information query response, the look-and-feel customization server judges whether any look-and-feel content corresponding to both the identifier of the requested look-and-feel content and the capability information already exists in the list of look-and-feel contents, and obtains the look-and-feel content directly if the look-and-feel content already exists, or else generates and obtains the look-and-feel content corresponding to both the identifier of the requested look-and-feel content and the capability information.

As shown in Table 1, the identifier of the requested look-and-feel content is Wallpaper1. The obtained screen resolution is 320*240. Therefore, the corresponding Wallpaper1_B may be obtained directly.

D7. The look-and-feel customization server sends the look-and-feel content corresponding to both the identifier of the requested look-and-feel content and the capability information to the terminal.

### Fifth Embodiment

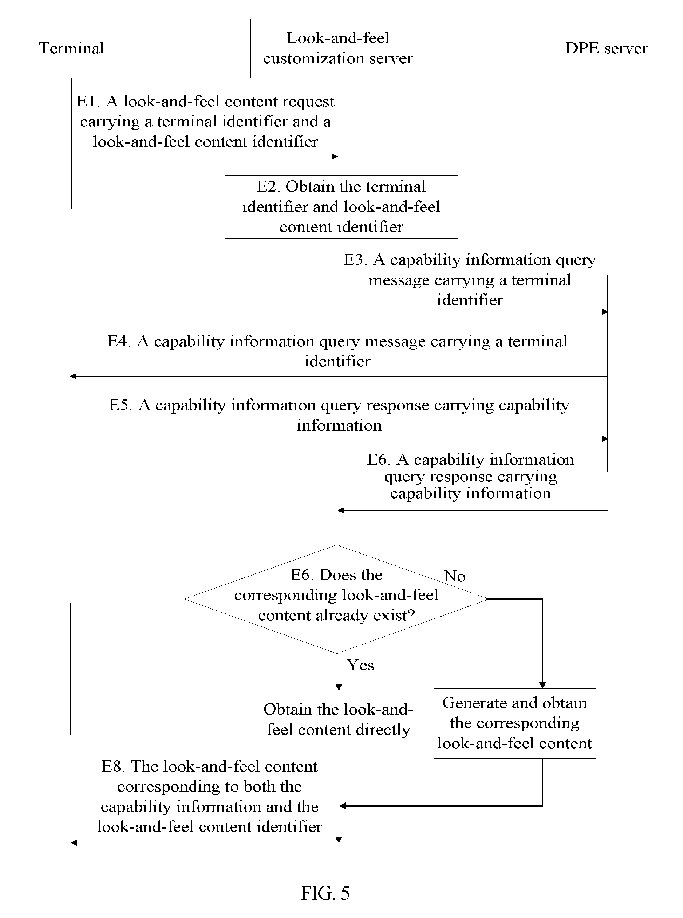

A method for providing customized look-and-feel contents of terminals is disclosed in this embodiment. In this embodiment, the look-and-feel customization server obtains information about capabilities of a terminal from a DPE server according to the terminal identifier reported by the terminal. As shown in FIG. 5, the method includes the following steps:

E1. The terminal sends a look-and-feel content request to the look-and-feel customization server, where the request carries both the terminal identifier and the identifier of the requested look-and-feel content.

E2. After receiving the look-and-feel content request, the look-and-feel customization server parses the look-and-feel content request, and obtains both the terminal identifier and the identifier of the requested look-and-feel content from the parsed request.

E3. The look-and-feel customization server sends a capability information query message which carries the obtained terminal identifier to a DPE server.

E4. After receiving the capability information query message, the DPE server sends the capability information query message to the terminal corresponding to the terminal identifier.

E5. After receiving the capability information query message, the terminal returns a capability information query response which carries the terminal capability information to the DPE server.

E6. After receiving the capability information query message from the terminal, the DPE server sends a capability information query response which carries the capability information to the look-and-feel customization server.

E7. After receiving the capability information query response, the look-and-feel customization server judges whether any look-and-feel content corresponding to both the identifier of the requested look-and-feel content and the capability information already exists in the list of look-and-feel contents, and obtains the look-and-feel content directly if the look-and-feel content already exists, or else generates and obtains the look-and-feel content corresponding to both the identifier of the requested look-and-feel content and the capability information.

E8. The look-and-feel customization server sends the look-and-feel content corresponding to both the identifier of the requested look-and-feel content and the capability information to the terminal.

In this embodiment, the capability information is obtained from the terminal in real time. Therefore, it is certain that the capability information obtained by the look-and-feel customization server is the latest and the look-and-feel content provided for the terminal is adaptable to the latest capability information.

In more embodiments of the method for providing customized look-and-feel contents of terminals, if the DPE server stores the information about the capabilities of a terminal locally, the DPE server may return the locally stored capability information to the look-and-feel customization server directly without querying the terminal about its capability information.

It is understandable to those skilled in the art that all or part of the steps of the foregoing embodiments may be implemented by hardware instructed by a program. The program may be stored in a computer-readable storage medium. When being executed, the program performs at least these steps: obtaining information about capabilities of the terminal; obtaining a look-and-feel content corresponding to the capability information; and sending the obtained look-and-feel content to the terminal. The storage medium may be a Read-Only Memory/Random Access Memory (ROM/RAM), a magnetic disk, a compact disk, and so on.

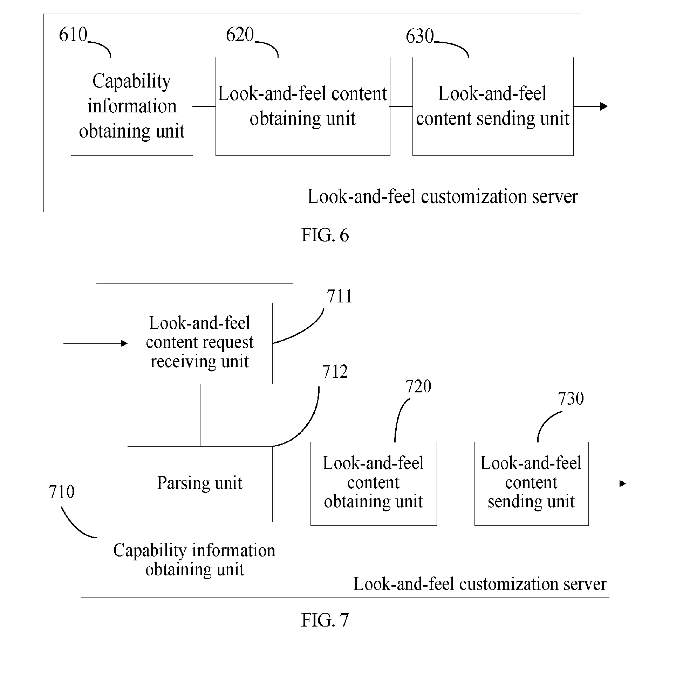

As shown in FIG. 6, the look-and-feel customization server in the first embodiment of the present invention includes a capability information obtaining unit 610, a look-and-feel content obtaining unit 620, and a look-and-feel content sending unit 630.

The capability information obtaining unit 610 is configured to obtain information about capabilities of a terminal.

The look-and-feel content obtaining unit 620 is configured to obtain a look-and-feel content corresponding to the capability information.

The look-and-feel content sending unit 630 is configured to send the look-and-feel content to the terminal.

In this embodiment, the capability information obtaining unit 610 may obtain information about the capabilities of the terminal according to the look-and-feel content request reported by the terminal or according to the service policy of the SP.

The specific method for obtaining the look-and-feel content may be: The look-and-feel content obtaining unit 620 judges whether any look-and-feel content corresponding to the capability information already exists, and obtains the look-and-feel content directly if the look-and-feel content already exists, or else generates and obtains the look-and-feel content corresponding to the capability information.

As shown in FIG. 7, the look-and-feel customization server in the second embodiment of the present invention includes: a capability information obtaining unit 710, a look-and-feel content obtaining unit 720, and a look-and-feel content sending unit 730.

The capability information obtaining unit 710 is configured to obtain information about capabilities of a terminal, and includes a look-and-feel content request receiving unit 711 and a parsing unit 712.

The look-and-feel content request receiving unit 711 is configured to receive a look-and-feel content request which carries the capability information from the terminal.

The parsing unit 712 is configured to: parse the look-and-feel content request and obtain the capability information in the request.

The look-and-feel content obtaining unit 720 is configured to obtain a look-and-feel content corresponding to the capability information obtained by the parsing unit 712. The specific method for obtaining the look-and-feel content may be: The look-and-feel content obtaining unit 720 judges whether any look-and-feel content corresponding to the capability information already exists, and obtains the look-and-feel content directly if the look-and-feel content already exists, or else generates and obtains the look-and-feel content corresponding to the capability information.

The look-and-feel content sending unit 730 is configured to send the obtained look-and-feel content to the terminal.

A look-and-feel customization server is disclosed in the third embodiment of the present invention. The third embodiment differs from the second embodiment only in that: the look-and-feel content request received by the look-and-feel content request receiving unit further carries a look-and-feel content identifier; the parsing unit is further configured to obtain the look-and-feel content identifier; and the look-and-feel content obtained by the look-and-feel content obtaining unit corresponds to the look-and-feel content identifier.

A look-and-feel customization server is disclosed in the fourth embodiment of the present invention. The look-and-feel customization server includes: a capability information obtaining unit, a look-and-feel content obtaining unit, and a look-and-feel content sending unit.

The capability information obtaining unit is configured to obtain information about capabilities of a terminal, and includes: a look-and-feel content request receiving unit, a capability information query message sending unit, a capability information query response receiving unit, and a parsing unit.

The look-and-feel content request receiving unit is configured to receive a look-and-feel content request which carries the capability information from the terminal.

The capability information query message sending unit is configured to send a capability information query message which carries the specific information to the capability information server.

The capability information query response receiving unit is configured to receive the capability information query response returned by the capability information server according to the capability information query message, where the response carries the capability information corresponding to the specific information.

The parsing unit is configured to: parse the capability information query response and obtain the capability information in the response.

The look-and-feel content obtaining unit is configured to obtain a look-and-feel content corresponding to the capability information obtained by the parsing unit. The specific method for obtaining the look-and-feel content may be: The look-and-feel content obtaining unit judges whether any look-and-feel content corresponding to the capability information already exists, and obtains the look-and-feel content directly if the look-and-feel content already exists, or else generates and obtains the look-and-feel content corresponding to the capability information.

The look-and-feel content sending unit is configured to send the obtained look-and-feel content to the terminal.

A look-and-feel customization server is disclosed in the fifth embodiment of the present invention. The fifth embodiment differs from the second embodiment only in that: the look-and-feel content request received by the look-and-feel content request receiving unit further carries a look-and-feel content identifier; the look-and-feel customization server further includes a look-and-feel content identifier parsing unit, which is configured to obtain the look-and-feel content identifier; and the look-and-feel content obtained by the look-and-feel content obtaining unit corresponds to the look-and-feel content identifier.

In embodiments of the look-and-feel customization server, the capability information server include: terminal capability information database server, UAProf information server, and DPE server.

In embodiments of the present invention, the specific information includes: terminal model, capability information identifier, or terminal identifier, or any combination thereof.

The look-and-feel customization system disclosed in the first embodiment of the present invention includes a look-and-feel customization server and a terminal.

The terminal is configured to receive a look-and-feel content.

The look-and-feel customization server is configured to: obtain information about capabilities of the terminal, obtain a look-and-feel content corresponding to the capability information, and send the look-and-feel content to the terminal.

In embodiments of the present invention, the information about the capabilities of the terminal may be obtained according to the look-and-feel content request reported by the terminal or according to the service policy of the SP.

The specific method for obtaining the look-and-feel content may be: The look-and-feel content obtaining unit judges whether any look-and-feel content corresponding to the capability information already exists, and obtains the look-and-feel content directly if the look-and-feel content already exists, or else generates and obtains the look-and-feel content corresponding to the capability information.

The look-and-feel customization system disclosed in the second embodiment of the present invention includes a look-and-feel customization server and a terminal.

The look-and-feel customization server is configured to: obtain information about capabilities of the terminal, obtain a look-and-feel content corresponding to the capability information, and send the look-and-feel content to the terminal. The look-and-feel customization server includes: a look-and-feel content request receiving unit, a parsing unit, a look-and-feel content obtaining unit, and a look-and-feel content sending unit.

The look-and-feel content request receiving unit is configured to receive a look-and-feel content request which carries the capability information from the terminal.

The parsing unit is configured to: parse the look-and-feel content request and obtain the capability information in the request.

The look-and-feel content obtaining unit is configured to obtain a look-and-feel content corresponding to the capability information obtained by the parsing unit. The specific method for obtaining the look-and-feel content may be: The look-and-feel content obtaining unit judges whether any look-and-feel content corresponding to the capability information already exists, and obtains the look-and-feel content directly if the look-and-feel content already exists, or else generates and obtains the look-and-feel content corresponding to the capability information.

The look-and-feel content sending unit is configured to send the look-and-feel content to the terminal.

A look-and-feel customization system is disclosed in the third embodiment of the present invention. The third embodiment differs from the second embodiment only in that: The look-and-feel content request received by the look-and-feel content request receiving unit further carries a look-and-feel content identifier; the look-and-feel customization server further includes a look-and-feel content identifier parsing unit, which is configured to obtain the look-and-feel content identifier; and the look-and-feel content obtained by the look-and-feel content obtaining unit corresponds to the look-and-feel content identifier.

The look-and-feel customization system disclosed in the fourth embodiment of the present invention includes a look-and-feel customization server, a terminal, and a capability information server.

The look-and-feel customization server is configured to: obtain information about capabilities of the terminal from the capability information server, obtain a look-and-feel content corresponding to the capability information, and send the look-and-feel content to the terminal. The look-and-feel customization server includes: a look-and-feel content request receiving unit, a capability information query message sending unit, a capability information query response receiving unit, a capability information parsing unit, a look-and-feel content obtaining unit, and a look-and-feel content sending unit.

The look-and-feel content request receiving unit is configured to receive the look-and-feel content request which carries the capability information from the terminal.

The capability information query message sending unit is configured to send a capability information query message which carries the specific information to the capability information server.

The capability information query response receiving unit is configured to receive the capability information query response returned by the capability information server according to the capability information query message, where the response carries the capability information corresponding to the specific information.

The capability information parsing unit is configured to: parse the capability information query response and obtain the capability information in the response.

The look-and-feel content obtaining unit is configured to obtain a look-and-feel content corresponding to the capability information obtained by the capability information parsing unit. The specific method for obtaining the look-and-feel content may be: The look-and-feel content obtaining unit judges whether any look-and-feel content corresponding to the capability information already exists, and obtains the look-and-feel content directly if the look-and-feel content already exists, or else generates and obtains the look-and-feel content corresponding to the capability information.

The look-and-feel content sending unit is configured to send the look-and-feel content to the terminal.

A look-and-feel customization system is disclosed in the fifth embodiment of the present invention. The fifth embodiment differs from the fourth embodiment only in that: The look-and-feel content request received by the look-and-feel content request receiving unit further carries a look-and-feel content identifier; the look-and-feel customization server further includes a look-and-feel content identifier parsing unit, which is configured to obtain the look-and-feel content identifier; and the look-and-feel content obtained by the look-and-feel content obtaining unit corresponds to the look-and-feel content identifier.

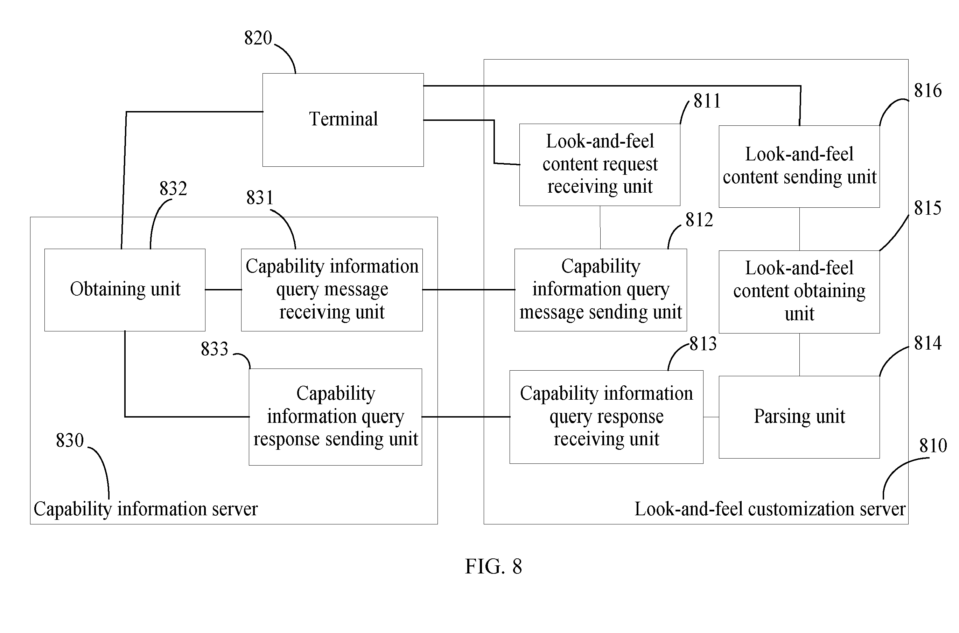

As shown in FIG. 8, the look-and-feel customization system disclosed in the sixth embodiment of the present invention includes: a look-and-feel customization server 810, a terminal 820, and a capability information server 830.

The look-and-feel customization server 810 is configured to: obtain information about capabilities of the terminal 820 from the capability information server 830, obtain a look-and-feel content corresponding to the capability information, and send the look-and-feel content to the terminal 820. The look-and-feel customization server 810 includes: a look-and-feel content request receiving unit 811, a capability information query message sending unit 812, a capability information query response receiving unit 813, a parsing unit 814, a look-and-feel content obtaining unit 815, and a look-and-feel content sending unit 816.

The look-and-feel content request receiving unit 811 is configured to receive the look-and-feel content request which carries the capability information from the terminal 820.

The capability information query message sending unit 812 is configured to send a capability information query message which carries the specific information to the capability information server 830.

The capability information query response receiving unit 813 is configured to receive the capability information query response returned by the capability information server 830 according to the capability information query message, where the response carries the capability information corresponding to the specific information.

The parsing unit 814 is configured to: parse the capability information query response and obtain the capability information in the response.

The look-and-feel content obtaining unit 815 is configured to obtain a look-and-feel content corresponding to the capability information obtained by the parsing unit 814. The specific method for obtaining the look-and-feel content may be: The look-and-feel content obtaining unit judges whether any look-and-feel content corresponding to the capability information already exists, and obtains the look-and-feel content directly if the look-and-feel content already exists, or else generates and obtains the look-and-feel content corresponding to the capability information.

The look-and-feel content sending unit 816 is configured to send the look-and-feel content to the terminal 820.

The capability information server 830 includes: a capability information query message receiving unit 831, an obtaining unit 832, and a capability information query response sending unit 833.

The capability information query message receiving unit 831 is configured to receive the capability information query message which carries the specific information from the look-and-feel customization server 810.

The obtaining unit 832 is configured to obtain the capability information corresponding to the specific information from the terminal 820. The specific method for obtaining the look-and-feel content may be: sending the capability information query message which carries the specific information to the terminal 820, and receiving a capability information query response returned by the terminal 820 according to the capability information query message. The capability information query response carries the terminal capability information corresponding to the specific information.

The capability information query response sending unit 833 is configured to send a capability information query response which carries the obtained capability information to the look-and-feel customization server 810.

In more embodiments of the look-and-feel customization system, the obtaining unit may obtain the capability information corresponding to the specific information from the local database directly.

In the embodiments of the look-and-feel customization system described here, the capability information server include: terminal capability information database server, UAProf information server, and DPE server.

In all embodiments of the look-and-feel customization system described here, the specific information includes: terminal model, capability information identifier, or terminal identifier, or any combination thereof.

To sum up, in the embodiments described here, the look-and-feel content provided for the user is adaptable to the capabilities of the terminal. Therefore, the effect of the look-and-feel content obtained by the user is good on the terminal, and the user satisfaction with the look-and-feel customization service is improved.

Besides, in the embodiments described here, the capability information is obtained from the terminal in real time. Therefore, it is certain that the capability information obtained by the look-and-feel customization server is the latest and the look-and-feel content provided for the terminal is adaptable to the latest capability information.

Detailed above are a method for providing customized look-and-feel contents of terminals, a look-and-feel customization server, and a look-and-feel customization system in the embodiments of the present invention. Although the invention is described through some exemplary embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A method for providing customized look-and-feel contents of terminals, comprising:
obtaining information about capabilities of a terminal;
obtaining a look-and-feel content corresponding to the capability information; and sending the look-and-feel content to the terminal.

2. The method of claim 1, wherein:
the obtaining of the information about the capabilities of the terminal is started according to a look-and-feel content request sent by the terminal or according to a look-and-feel content service policy provided by a Service Provider (SP) for the terminal.

3. The method of claim 2, wherein:
if the look-and-feel content request carries capability information, the capability information is obtained directly; or
if the look-and-feel content request carries specific information, the corresponding capability information is obtained from a capability information server.

4. The method of claim 3, wherein the specific information comprises at least one of the following information items:
a terminal model, a capability information identifier, or a terminal identifier.

5. The method of claim 2, wherein:
if the look-and-feel content request further carries a look-and-feel content identifier, the look-and-feel content is obtained according to the look-and-feel content identifier, wherein the look-and-feel content identifier corresponds to the capability information.

6. The method of claim 1, claim 2, claim 3, or claim 4, wherein the obtaining of the look-and-feel content corresponding to the capability information comprises:
judging whether any look-and-feel content corresponding to the capability information already exists, and obtaining the look-and-feel content directly if the look-and-feel content already exists, or else generating and obtaining the look-and-feel content corresponding to the capability information.

7. The method of claim 5, further comprising:
judging whether any look-and-feel content corresponding to both the capability information and the look-and-feel content identifier already exists, and obtaining the look-and-feel content directly if the look-and-feel content already exists, or else generating and obtaining the look-and-feel content corresponding to both the capability information and the look-and-feel content identifier.

8. A look-and-feel customization server, comprising:
a capability information obtaining unit, adapted to obtain information about capabilities of a terminal;
a look-and-feel content obtaining unit, adapted to obtain a look-and-feel content corresponding to the capability information; and
a look-and-feel content sending unit, adapted to send the look-and-feel content to the terminal.

9. The look-and-feel customization server of claim 8, wherein the capability information obtaining unit comprises:
a look-and-feel content request receiving unit, adapted to receive a look-and-feel content request which carries capability information from the terminal; and
a parsing unit, adapted to: parse the look-and-feel content request and obtain capability information.

10. The look-and-feel customization server of claim 9, wherein:
the look-and-feel content request received by the look-and-feel content request receiving unit further carries a look-and-feel content identifier;
the parsing unit is further adapted to obtain the look-and-feel content identifier; and
the look-and-feel content obtained by the look-and-feel content obtaining unit corresponds to both the capability information and the look-and-feel content identifier.

11. The look-and-feel customization server of claim 8, wherein the capability information obtaining unit comprises:
a look-and-feel content request receiving unit, adapted to receive a look-and-feel content request which carries specific information from the terminal;
a capability information query message sending unit, adapted to send a capability information query message which carries the specific information to a capability information server;
a capability information query response receiving unit, adapted to receive a capability information query response returned by the capability information server according to the capability information query message, wherein the response carries the capability information corresponding to the specific information; and
a capability information parsing unit, adapted to: parse the capability information query response and obtain the capability information in the response.

12. The look-and-feel customization server of claim 11, wherein:
the look-and-feel content request received by the look-and-feel content request receiving unit further carries a look-and-feel content identifier;
the look-and-feel customization server further comprises a look-and-feel content identifier parsing unit, which is adapted to obtain the look-and-feel content identifier; and
the look-and-feel content obtained by the look-and-feel content obtaining unit corresponds to both the capability information and the look-and-feel content identifier.

13. The look-and-feel customization server of claim 11 or claim 12, wherein the specific information comprises at least one of the following information items:
a terminal model, a capability information identifier, or a terminal identifier.

14. A look-and-feel customization system, comprising:
a terminal, adapted to receive a look-and-feel content; and
a look-and-feel customization server, adapted to: obtain information about capabilities of the terminal, obtain a look-and-feel content corresponding to the capability information, and send the look-and-feel content to the terminal.

15. The look-and-feel customization system of claim 14, wherein the look-and-feel customization server comprises:
a look-and-feel content request receiving unit, adapted to receive a look-and-feel content request which carries capability information from the terminal;
a parsing unit, adapted to: parse the look-and-feel content request and obtain the capability information in the request;
a look-and-feel content obtaining unit, adapted to obtain the look-and-feel content corresponding to the capability information obtained by the parsing unit; and
a look-and-feel content sending unit, adapted to send the look-and-feel content to the terminal.

16. The look-and-feel customization system of claim 15, wherein:
the look-and-feel content request received by the look-and-feel content request receiving unit further carries a look-and-feel content identifier;
the look-and-feel customization server further comprises a look-and-feel content identifier parsing unit, which is adapted to obtain the look-and-feel content identifier; and
the look-and-feel content obtained by the look-and-feel content obtaining unit corresponds to both the capability information and the look-and-feel content identifier.

17. The look-and-feel customization system of claim 14, wherein:
the look-and-feel customization system further comprises a capability information server, which is adapted to provide capability information for the look-and-feel customization server;
the look-and-feel customization server comprises:
a look-and-feel content request receiving unit, adapted to receive a look-and-feel content request which carries specific information from the terminal;
a capability information query message sending unit, adapted to send a capability information query message which carries the specific information to the capability information server;
a capability information query response receiving unit, adapted to receive a capability information query response returned by the capability information server according to the capability information query message, wherein the response carries the capability information corresponding to the specific information;
a capability information parsing unit, adapted to: parse the capability information query response and obtain the capability information in the response;
a look-and-feel content obtaining unit, adapted to obtain the look-and-feel content corresponding to the capability information; and
a look-and-feel content sending unit, adapted to send the look-and-feel content to the terminal.

18. The look-and-feel customization system of claim 17, wherein:
the look-and-feel content request received by the look-and-feel content request receiving unit further carries a look-and-feel content identifier;
the look-and-feel customization server further comprises a look-and-feel content identifier parsing unit, which is adapted to obtain the look-and-feel content identifier; and
the look-and-feel content obtained by the look-and-feel content obtaining unit corresponds to both the capability information and the look-and-feel content identifier.

19. The look-and-feel customization system of claim 17 or claim 18, wherein:
the specific information comprises at least one of the following information items:
a terminal model, a capability information identifier, or a terminal identifier.
